# EUROPEAN PATENT SPECIFICATION

(11) **EP 3 498 579 B1**
(45) Date of publication and mention of the grant of the patent: **15.07.2020**
(21) Application number: 16912619.0
(22) Date of filing: 08.08.2016
(51) Int. Cl.: B62J 9/00, B62J 25/00

(54) **VEHICLE**
FAHRZEUG
VÉHICULE

(43) Date of publication of application: 19.06.2019
(73) Proprietor: Honda Motor Co., Ltd., Tokyo 107-8556 (JP)
(72) Inventor: KAWANO, Sunao, Wako-shi Saitama 351-0193 (JP)
(74) Representative: Weickmann & Weickmann PartmbB
(86) International application number: PCT/JP2016/073228
(87) International publication number: WO 2018/029735

(56) References cited:
- FR-A1- 2 740 754
- JP-A- H09 150 768
- JP-A- 2002 331 979
- JP-A- 2009 006 964
- JP-A- 2011 111 111
- JP-A- 2013 208 962
- JP-A- 2013 208 962
- US-A1- 2002 166 709

## Description

### Technical Field

The present invention relates to a vehicle including a step floor that receives the weight of a rider, a frame arranged below the step floor, and a storage case that stores stored items in a space formed by the step floor and the frame.

### Background Art

FR 2740754 A1 on which the preamble of claim 1 is based shows a scooter type vehicle having a footrest panel placed above the bodywork chassis. This panel has a cavity formed between and under the bodywork chassis which is used as a housing section. The cavity opening is closed by a cover located at the upper face of the footrest panel. The scooter has a large volume housing located under the footrest to accommodate e.g. a battery without the necessity of reinforcing the footrest panel rigidity.

JP 2013208962 A shows a saddle riding type electric vehicle with a battery stored in a battery storage part provided below a floor on which an occupant puts his feet. A lid member, constituting the floor, of the battery storage part is integrated with the upper surface of the battery. A feeding connector and a striker are provided on the lower surface of the battery. A power-receiving connector, connected with the feeding connector, and a latch for fixing the striker are provided in the battery storage part. When the battery storage part is closed by the lid member, the feeding connector and the power-receiving connector are connected to each other while the striker is fixed to the latch.
US 2002/166709 A1 shows a scooter type vehicle with a luggage storage space above an engine cover and below a seat and open to the front, rear and lateral sides of the vehicle.

Conventional vehicles that include a step floor and a storage case in which stored items such as electrical equipment and cables can be stored below the step floor are disclosed in Japanese Laid-Open Patent Publication No. 2003-341573 and Japanese Laid-Open Patent Publication No. 2015-193364, for example.

### Summary of Invention

In such a vehicle, the weight of a rider placed on the step floor must be received by the frame of the vehicle. Therefore, generally, the weight received by the step floor is directly transmitted to the frame from this step floor or transmitted from the step floor to the frame via a stay. In this case, since it is necessary to separately provide a weight transfer structure that transfers the weight from the step floor to the frame, there is a problem that the cost of the vehicle is increased.

Therefore, it is an object of the present invention to provide a vehicle that can realize a reduced cost, without including a specialized weight transfer structure.

The invention provides a vehicle according to claim 1.

The vehicle comprises a step floor that receives the weight of a rider, a frame arranged below the step floor, and a storage case that stores stored items in a space formed by the step floor and the frame, and the vehicle has the following features.

First Feature: The storage case includes weight receiving portions that receive the weight of the step floor and weight transfer portions that transfer the received weight to the frame, formed integrally.

Second Feature: The weight transfer portions are formed such that at least portions thereof overlap with the frame, in a planar view.

Third Feature: The weight receiving portions are formed such that at least portions thereof overlap with the frame, in a planar view.

Fourth Feature: At least one pair of the weight transfer portions is included in the storage case, and the stored items are stored between the weight transfer portions forming the pair.

Fifth Feature: The stored items are stored in the storage case such that at least portions thereof overlap with the weight transfer portions, in a side surface view.

Sixth Feature: The weight transfer portions are ribs formed along a longitudinal direction of the frame.

Seventh Feature: The weight transfer portions are ribs formed along a transverse direction of the frame.

Eighth Feature: The stored items include wire-shaped members, at least portions of the wire-shaped members overlap with the frame, in a planar view, and at least a portion of the storage case is arranged between the wire-shaped members and the frame.

According to the first feature of the present embodiment, since the storage case includes the weight receiving portions that receive the weight of the step floor and the weight transfer portions that transfer the weight to the frame, in an integrated manner, the storage case can transmit the weight of the step floor (including the weight of the rider) to the frame, while storing the stored items. Due to this, there is no need for a specialized weight transfer structure, and therefore it is possible to reduce the cost of the vehicle.

According to the second feature of the present embodiment, since at least a portion of the weight transfer portion overlaps with the frame, it is possible to suitably transfer the weight of the step floor to the frame.

According to the third feature of the present embodiment, since at least a portion of the weight receiving portion overlaps with the frame, it is possible to suitably transfer the weight of the step floor to the frame.

According to the fourth feature of the present embodiment, since the stored items are stored between the pair of weight transfer portions in the storage case, it is possible to store the stored items while suitably transferring the weight of the step floor to the frame.

According to the fifth feature of the present embodiment, since at least a portion of the stored items are stored in the storage case in a manner to overlap with the weight transfer portion, in a planar view, it is possible to store the stored items in a small space while suitably transferring the weight of the step floor to the frame.

According to the sixth feature of the present embodiment, since the weight transfer portions are ribs formed along a longitudinal direction of the frame, it is possible to suitably transfer the weight of the step floor to the frame along the longitudinal direction.

According to the seventh feature of the present embodiment, since the weight transfer portions are ribs formed along the transverse direction of the frame, it is possible to suitably transfer the weight of the step floor along the transverse direction.

According to the eighth feature of the present embodiment, since at least portions of the wire-shaped members, which are the stored items, overlap with the frame and at least a portion of the storage case is arranged between the wire-shaped members and the frame, it is possible to store the wire-shaped members in the storage case while protecting the wire-shaped members from the frame.

### Brief Description of Drawings

FIG. 1 is a left side surface view of a motorcycle according to the present embodiment.
FIG. 2 is a planar view of the step floor of the motorcycle of FIG. 1.
FIG. 3 is a planar view of a state in which the step floor and the lid of FIG. 2 are removed.
FIG. 4 is a planar view of a state in which the battery cover and the band of FIG. 3 are removed.
FIG. 5 is a planar view of the storage case of FIG. 3 and FIG. 4.
FIG. 6 is a floor surface view of the storage case of FIG. 5.
FIG. 7 is a cross-sectional view along the line VII-VII of FIG. 1.
FIG. 8 is a cross-sectional view along the line VIII-VIII of FIG. 1.
FIG. 9 is a perspective view portions of the storage case and lower frame within the dashed lines.
FIG. 10 is a perspective view portions of the storage case and lower frame within the dashed lines.

### Description of Preferred Embodiments

The following describes the present invention while providing examples of preferred embodiments and referencing the accompanying drawings.

### [Schematic Configuration of a Motorcycle 10]

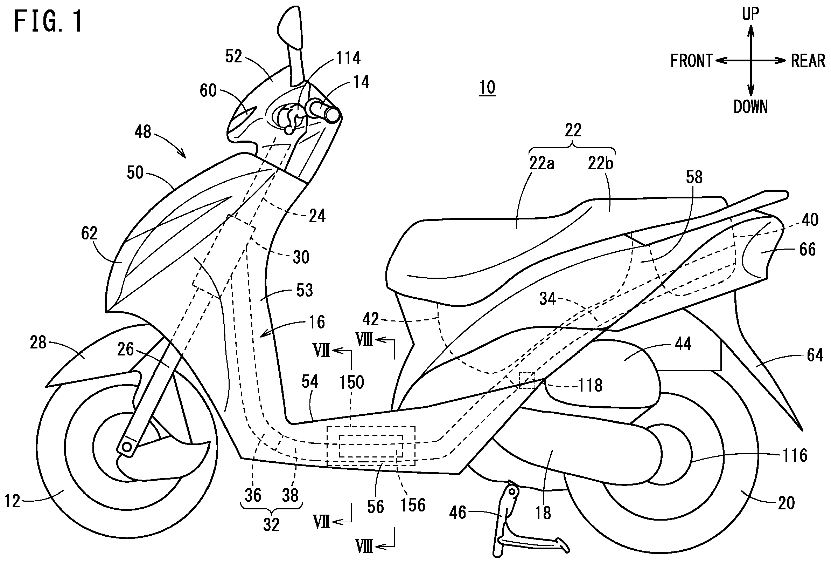

A scooter type of motorcycle 10 shown in FIG. 1 is described as an example of an embodiment of the present invention. The present invention is not limited to the scooter-type motorcycle 10, and can also be applied to other types of vehicles such as a Cub style saddle-type vehicle. Furthermore, in the description of the present embodiment, the directions of front and rear, left and right, and up and down are used in reference to a direction as seen from a driver (rider) sitting on the motorcycle 10.

As shown in FIG. 1, the motorcycle 10 includes a front wheel 12 that is the steered wheel, a handle 14 that steers the front wheel 12, a vehicle body frame 16 forming the vehicle body, a unit swing engine 18 that is a drive source, a rear wheel 20 that is the driven wheel, a seat 22, and the like.

The front wheel 12 is provided at the front of the vehicle body, and is axially supported in a rotatable manner by a left-right pair of front forks 26 that extend from the bottom end side of a steering shaft 24. A front fender 28 that covers the area above the front wheel 12 is attached to the front fork 26. The top end side of the steering shaft 24 is joined to the handle 14, and the substantially middle portion of the steering shaft 24 is held in a pivotable manner by a head pipe 30 of the vehicle body frame 16.

The handle 14 extends with left-right symmetry in the vehicle width direction, and is centered on a coupling portion coupling the handle 14 to the steering shaft 24. As a result of a driver manipulating the handle 14, the orientation of the front wheel 12 coupled thereto via the steering shaft 24 and the front forks 26 is changed.

The vehicle body frame 16 is made of metal material such as aluminum, and is formed by a head pipe 30, a main frame 32 joined to the head pipe 30, and a seat rail 34 serving as another frame joined to the rear end of the main frame 32. The main frame 32 is formed by a down frame 36 extending downward from the head pipe 30 and a left-right pair of lower frames 38 that are joined to the rear end of the down frame 36, extend backward at a vehicle body floor portion, and curve from the vehicle body floor portion to extend to the rear of the vehicle body. A left-right pair of seat rails 34 serving as a rear frame is joined to the rear end of the left-right pair of lower frames 38.

A unit swing engine 18 is supported on the left-right pair of lower frames 38 to be vertically swingable. Furthermore, a fuel tank 40 that supplies fuel (gasoline) to the unit swing engine 18 is held on the left-right pair of seat rails 34, at a top rear portion of the vehicle body.

Although not shown in the drawings, the unit swing engine 18 includes an engine and a belt-type continuously variable transmission that shifts the output of the engine in a continuous manner, using a transmission belt and a movable pulley, and transmits the shifted output to the rear wheel 20. The unit swing engine 18 functions also as a swing arm. The rear wheel 20 is axially supported in a rotatable manner by the unit swing engine 18, and is rotated as a driven wheel by transmitting rotational drive force from the continuously variable transmission to propel the vehicle body.

The seat 22 is provided to the rear of the vehicle from a substantially middle portion of the vehicle in the front-rear direction. The seat 22 is a so-called tandem seat, which is formed by a front seat 22a on which the driver sits and a rear seat 22b on which a rider sits, located behind the front seat 22a. A storage box 42 for storing objects is provided below the seat 22 and in front of the fuel tank 40. The seat 22 also serves as a lid covering the top surface of the storage box 42, and the space inside the storage box 42 is exposed by pulling the seat 22 forward and up. An air cleaner 44 that cleans the exhaust gas of the engine is provided below the storage box 42.

A main stand 46 that is pivotably supported is provided below the unit swing engine 18. The main stand 46 is erected to be substantially orthogonal to the road surface when parked, and holds up the rear wheel 20 to support the motorcycle 10.

A vehicle body cover 48 made of resin or the like and forming the outer appearance of the vehicle body across the front-rear direction of the vehicle body, is attached to the vehicle body frame 16, the steering shaft 24, and the like to form the motorcycle 10. The vehicle body cover 48 includes a front cover 50 that covers the front portion of the steering shaft 24 and the top portion of the front wheel 12, a handle cover 52 that covers the handle 14 above the front cover 50, a leg shield 53 that covers the legs of the driver from the front and is located behind the front cover 50, a floor center cover 56 that forms a step floor 54 behind the leg shield 53, and a body cover 58 that is arranged below the seat 22, is connected to the floor center cover 56, and extends backward.

The handle cover 52 covers the top portion of the steering shaft 24 and the central portion of the handle 14, and a meter apparatus (not shown in the drawings) that displays vehicle speed and the like is provided on the rear top surface of the handle cover 52. A position light section 60 is provided on the handle cover 52, and a headlight section 62 is provided on the front cover 50.

The step floor 54 is formed with a flat shape, so that the driver can rest their feet thereon while riding. The body cover 58 extends upward and backward from the floor center cover 56, to cover the fuel tank 40, the storage box 42, and the like. A rear fender 64 that covers the rear wheel 20 from the rear and has a license plate or the like placed thereon is attached to the bottom portion of the rear side of the body cover 58. Furthermore, a tail light 66 is arranged on the rear side of the body cover 58. The tail light 66 lights up and turns off in response to braking by the driver.

### [Weight Transfer Structure under the Step Floor 54]

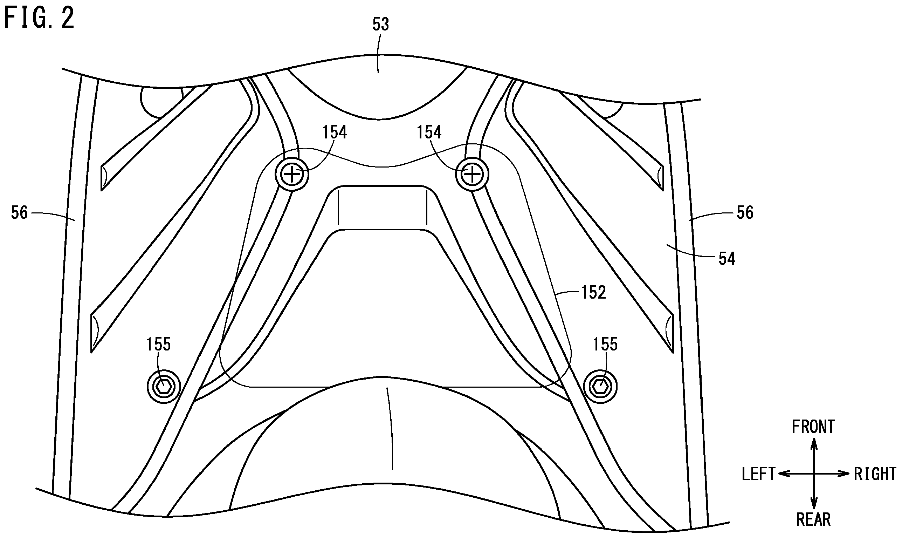

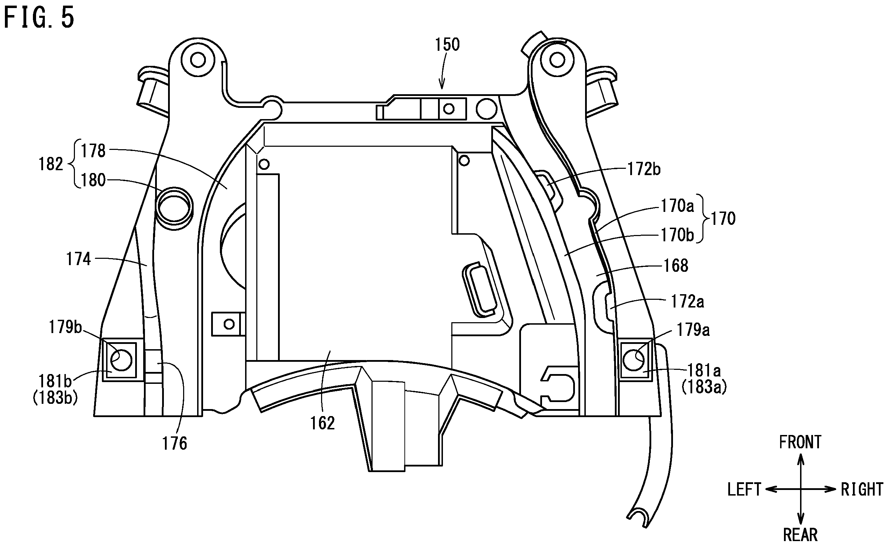

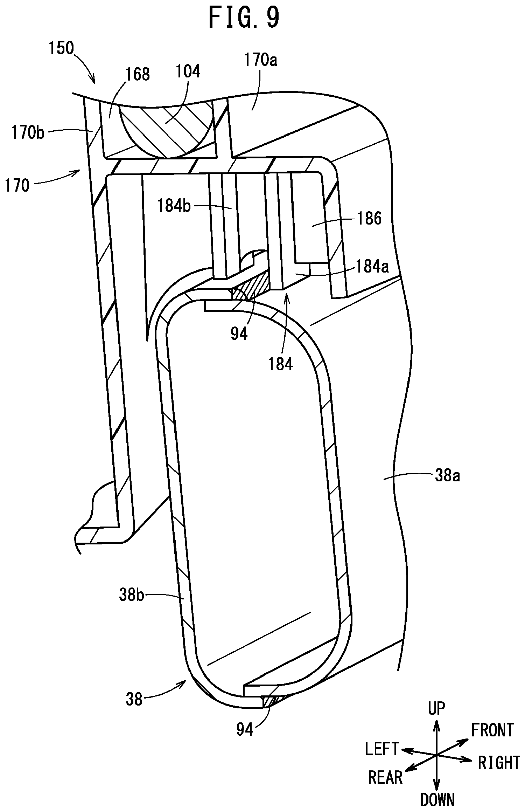

The following describes a weight transfer structure below the step floor 54, which is a characteristic configuration of the motorcycle 10 according to the present embodiment, with reference to FIG. 2 to FIG. 10.

This weight transfer structure is a structure in which, when a foot of a driver sitting on the front seat 22a is placed on the step floor 54, the step floor 54 transfers the weight received from the foot of the driver to the lower frame 38, via a storage case 150 provided under the step floor 54. In other words, the storage case 150 itself functions as a weight transfer structure that receives the weight of the step floor 54 (including the weight of the driver) and transfers the received weight to the lower frame 38.

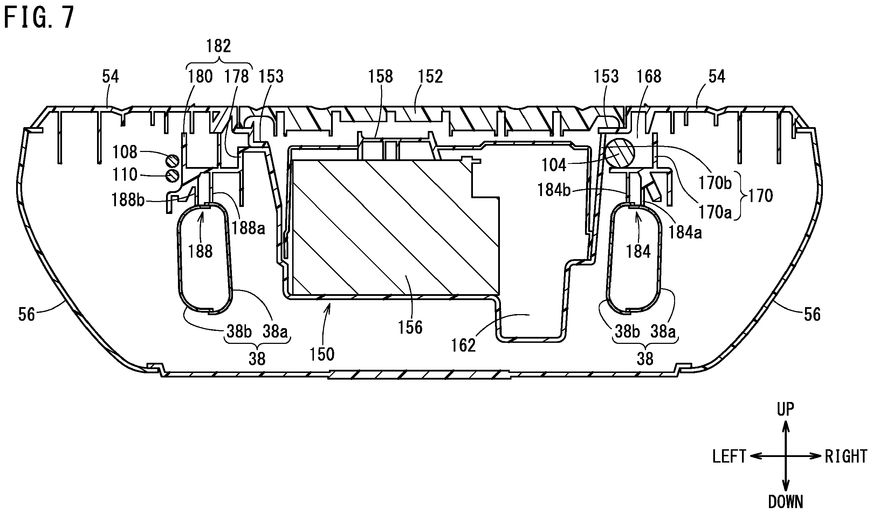

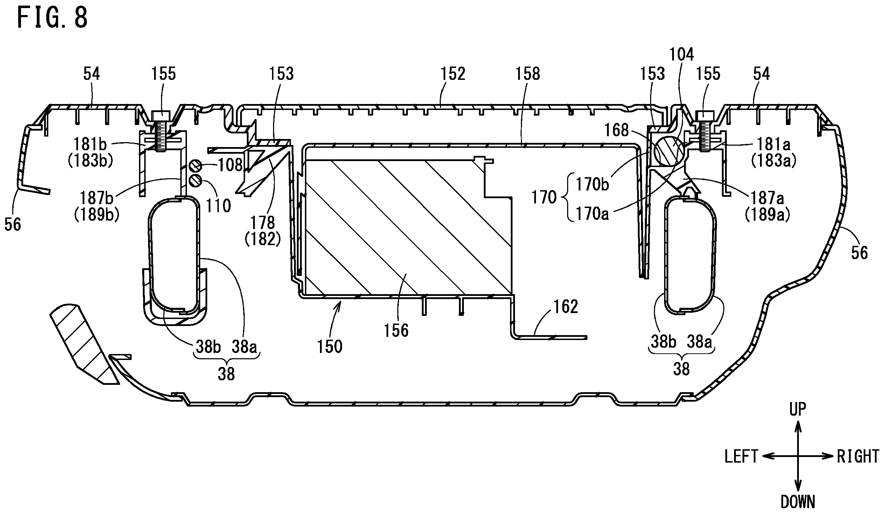

As shown in FIG. 2, a lid 152 flush with the top surface of the step floor 54 is provided at the center of the step floor 54. As shown in FIG. 7 and FIG. 8, an opening portion in which the lid 152 is arranged is formed in the center of the step floor 54, and an edge portion 153 defining the opening portion is formed as a stepped portion heading downward. Due to this, when the opening portion is sealed by the lid 152, the edge portion (end portion) of the lid 152 is supported on the edge portion 153 of the step floor 54, and the top surface of the lid 152 and top surface of the step floor 54 can be made flush with each other. Furthermore, when the feet of the driver are placed on the lid 152, the weight received by the lid 152 from the driver is transferred to the edge portion 153 of the step floor 54 via the edge portion of the lid 152.

By loosening two screws 154 provided on the leg shield 53 side of the lid 152, the lid 152 can be removed from the step floor 54. Furthermore, the step floor 54 is secured to the storage case 150 by two bolts 155 provided on the rear side thereof.

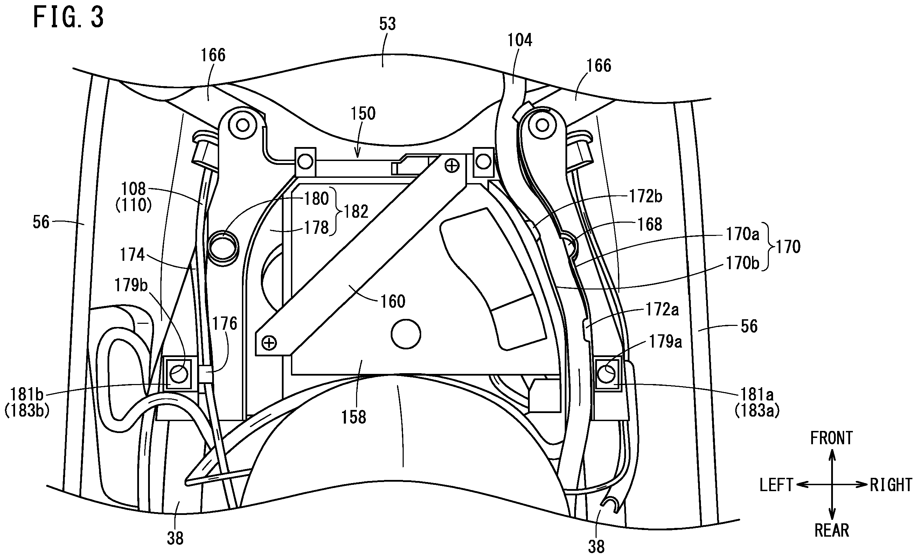

FIG. 3 is a planar view showing a state in which the step floor 54 and the lid 152 are removed. In the planar view, the storage case 150 is arranged between the floor center covers 56 in the left-right direction, and arranged between the leg shield 53 and the body cover 58 in the front-rear direction. In this case, the storage case 150 is arranged such that a portion of the storage case 150 is arranged on a left-right pair of lower frames 38 extending in the front-rear direction within the floor center cover 56.

A battery cover 158 covering a battery 156 from above is arranged in the center portion of the storage case 150. The battery cover 158 is secured to the storage case 150 by a belt-shaped band 160. The battery cover 158 and the band 160 are arranged directly below the lid 152. Accordingly, when the screws 154 are loosened and the band 160 is released while the lid 152 is in a removed state and the battery cover 158 is lifted up, it is possible to access the battery 156 and a fuse box 164 described further below.

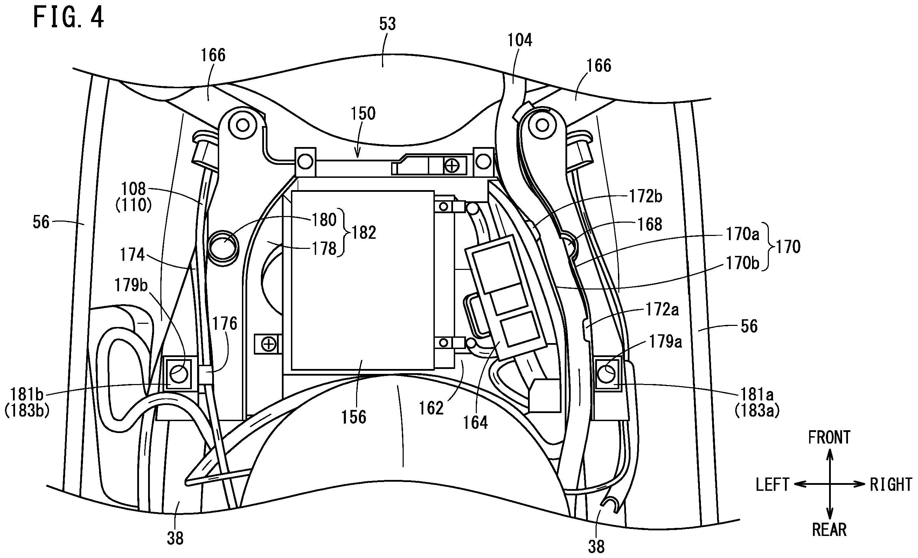

FIG. 4 is a planar view showing a state in which the battery cover 158 and the band 160 are removed. In the center portion of the storage case 150, the portion covered by the battery cover 158 may be formed as a battery storage portion 162 with a substantially rectangular shape that is recessed downward. The battery 156 is stored in the battery storage portion 162, and the fuse box 164 is also stored in the battery storage portion 162 on the right side of the battery 156.

As shown in FIG. 3 and FIG. 4, the front end of the storage case 150 is supported by and secured to the left-right pair of lower frames 38, via a left-right pair of stays 166. Each stay 166 is a component provided for securing and supporting the storage case 150 on the lower frames 38, and it should be noted that the stays 166 do not have a function of transferring the weight of the step floor 54, which is described further below. As shown in FIG. 3 to FIG. 5, FIG. 7, and FIG. 8, a groove-shaped harness storage portion 168 is formed in the front-rear direction on the right side of the storage case 150, and the wire harness 104, which is a wire-shaped member, is arranged in this harness storage portion 168.

Specifically, the harness storage portion 168 is formed on the right side of the top surface of the storage case 150, by having left-right pair wall portions 170a and 170b with curved shapes for guiding the wire harness 104 established protruding upward. In other words, the space between the wall portions 170a and 170b is configured as the harness storage portion 168 in which the wire harness 104 is arranged along the right-side lower frame 38.

As shown in FIG. 7 and FIG. 8, these wall portions 170a and 170b are configured as a weight receiving portion 170 that receives the weight of the step floor 54 by having each wall portion 170a and 170b serving as a guide for the wire harness 104 contact the floor surface (the right-side edge portion 153 and the like) of the step floor 54. In other words, in the present embodiment, each wall portion 170a and 170b, which is an independent wall, is used as a weight receiving portion 170.

As shown in FIG. 3 to FIG. 5, the right-side wall portion 170a is formed conforming to the shape of the right-side surface of the storage case 150. Furthermore, the left-side wall portion 170b is formed with a shape corresponding to the right-side wall portion 170a, and protruding upward from the right end of the battery storage portion 162. Furthermore, claw portions 172a and 172b for holding the wire harness 104 arranged in the harness storage portion 168 are respectively provided to the rear of the right-side wall portion 170a and to the rear of the left-side wall portion 170b.

The wire harness 104 is electrical equipment obtained by bundling electrical lines connected to the battery 156, the fuse box 164, an ECU, and the like, and is arranged spanning from the front of the motorcycle 10 (near the head pipe 30) to the rear of the motorcycle 10, through the right side of the down frame 36 and the harness storage portion 168. Accordingly, the battery 156 and the fuse box 164 are connected to electrical lines branching from the wire harness 104.

On the other hand, a groove-shaped wire storage portion 174 is formed in the front-rear direction on the left side of the top surface of the storage case 150, and the rear wheel brake wire 108 and throttle wire 110 are arranged in this wire storage portion 174. Specifically, the wire storage portion 174 is formed by depressing the top surface of the storage case 150 downward.

The rear wheel brake wire 108 is a wire-shaped member that transmits a brake manipulation force caused by the manipulation of the interlock brake lever 114 by the driver to the rear wheel brake 116, and is arranged spanning from above the head pipe 30 to the rear wheel brake 116, through the head pipe 30, the left side of the down frame 36, and the wire storage portion 174.

The throttle wire 110 is a component that transmits the rotational manipulation amount of a handle grip on the right side, not shown in the drawings, caused by the driver to the throttle apparatus 118, and is arranged spanning from above the head pipe 30 to the throttle apparatus 118, through the head pipe 30, the left side of the down frame 36 and the wire storage portion 174.

A clamp portion 176 that holds the rear wheel brake wire 108 and the throttle wire 110 arranged in the wire storage portion 174 is provided to the rear of the wire storage portion 174.

Furthermore, on the left side of the top surface of the storage case 150, a wall portion 178 having a greater planar area than the two wall portions 170a and 170b is established protruding upward between the left end of the battery storage portion 162 and the wire storage portion 174, and a cylindrical portion 180 is also established here. The wall portion 178 and cylindrical portion 180 are configured as a weight receiving portion 182 that receives the weight of the step floor 54 by having the wall portion 178 and the cylindrical portion 180 also contact the floor surface (left-side edge portion 153 and the like) of the step floor 54.

In addition, as shown in FIG. 3 to FIG. 5 and FIG. 8, protruding portions 181a and 181b having screw holes 179a and 179b for engaging with the bolts 155 formed therein are formed respectively at a location near the claw portion 172b and a location near the clamp portion 176 on the top surface of the storage case 150. The protruding portions 181a and 181b protrude upward and are configured as weight receiving portions 183a and 183b that receive the weight of the step floor 54 by contacting the floor surface of the step floor 54.

Accordingly, as shown in FIG. 3 to FIG. 5, FIG. 7, and FIG. 8, in the present embodiment, the left-right pairs of weight receiving portions 170, 182, 183a, and 183b that receive the weight of the step floor 54 are provided on the top surface of the storage case 150, and the battery storage portion 162 storing the battery 156 and the fuse box 164 is formed between these weight receiving portions 170, 182, 183a, and 183b.

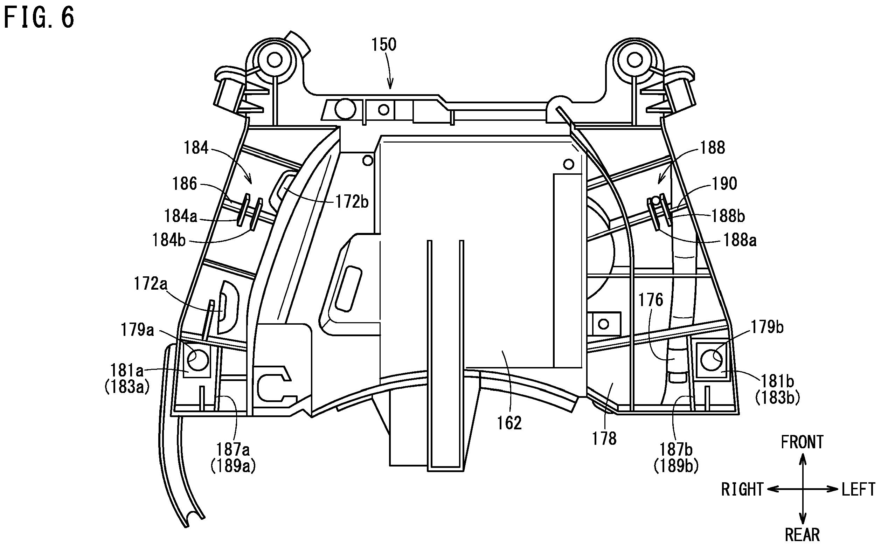

As shown in FIG. 6 to FIG. 9, two ribs 184a and 184b extending in the front-rear direction along the harness storage portion 168 are formed at locations directly below the harness storage portion 168, on the back surface of the storage case 150. In other words, the two ribs 184a and 184b are formed between the two wall portions 170a and 170b forming the weight receiving portion 170, in the planar view. The two ribs 184a and 184b are established protruding downward on the back surface of the storage case 150, and are connected by a rib 186 that is a bridge portion extending in the left-right direction.

Here, as shown in FIG. 7 to FIG. 9, the left-right pair of lower frames 38 is formed by bringing a right-side frame portion 38a and a left-side frame portion 38b into contact with each other midway at the top and bottom end portions, and coupling the contact portions together using welding or the like. In other words, beads are formed by applying welding in a state where the top and bottom ends of the right-side frame portion 38a and the top and bottom ends of the left-side frame portion 38b are overlapping in an aligned manner. These beads function as coupling portions 94 that couple the right-side frame portion 38a and the left side frame portion 38b, thereby forming the lower frames 38.

Among the two ribs 184a and 184b, the rib 184a contacts the top end portion of the right-side frame portion 38a forming the right-side lower frame 38, and the rib 184b contacts the top end portion of the left-side frame portion 38b forming this lower frame 38. In other words, the ribs 184a and 184b respectively contact the top end portions of the right-side frame portion 38a and the left-side frame portion 38b, in a state where the pair of ribs 184a and 184b are formed along the coupling portion 94 of the lower frame 38 extending in the front-rear direction. Due to this, the two ribs 184a and 184b function as a weight transfer portion 184 that transfers the weight of the step floor 54 received by the weight receiving portion 170 to the lower frame 38.

On the other hand, on the back surface of the storage case 150, two ribs 188a and 188b extending in the front-rear direction are formed at locations directly below the cylindrical portion 180 forming the weight receiving portion 182. The two ribs 188a and 188b are established protruding downward on the back surface of the storage case 150, and are connected by a rib 190 that is a bridge portion extending in the left-right direction.

In this case as well, among the two ribs 188a and 188b, the rib 188a contacts the top end portion of the right-side frame portion 38a forming the left-side lower frame 38, and the rib 188b contacts the top end portion of the left-side frame portion 38b forming this lower frame 38. In other words, the ribs 188a and 188b respectively contact the top end portions of the right-side frame portion 38a and the left-side frame portion 38b, in a state where the pair of ribs 188a and 188b are formed along the coupling portion 94 of the lower frame 38 extending in the front-rear direction. Due to this, the two ribs 188a and 188b function as a weight transfer portion 188 that transfers the weight of the step floor 54 received by the weight receiving portion 182 to the lower frame 38.

Furthermore, on the back surface of the storage case 150, ribs 187a contacting the right-side lower frame 38 are established, protruding downward, along the front-rear direction at a location near the protruding portion 181a (weight receiving portion 183a). Yet further, on the back surface of the storage case 150, ribs 187b contacting the left-side lower frame 38 are established, protruding downward, along the front-rear direction at a location near the protruding portion 181b (weight receiving portion 183b). These ribs 187a and 187b function as weight transfer portions 189a and 189b that transfer the weight of the step floor 54 received by the weight receiving portions 183a and 183b to the left-right pair of lower frames 38.

Accordingly, as shown in FIG. 6 to FIG. 9, in the present embodiment, the left-right pairs of weight transfer portions 184, 188, 189a, and 189b that transfer the weight of the step floor 54 to the left-right pair of lower frames 38 are provided on the floor surface of the storage case 150, and the battery storage portion 162 housing the battery 156 and the fuse box 164 is formed between these weight transfer portions 184, 188, 189a, and 189b. Furthermore, as shown in FIG. 7 and FIG. 8, when viewed from the left-right direction (viewed from a side surface), at least portions of the wire harness 104, the rear wheel brake wire 108, the throttle wire 110, the battery 156, and the fuse box 164 are housed in the storage case 150 in a manner to overlap with the weight transfer portions 184, 188, 189a, and 189b.

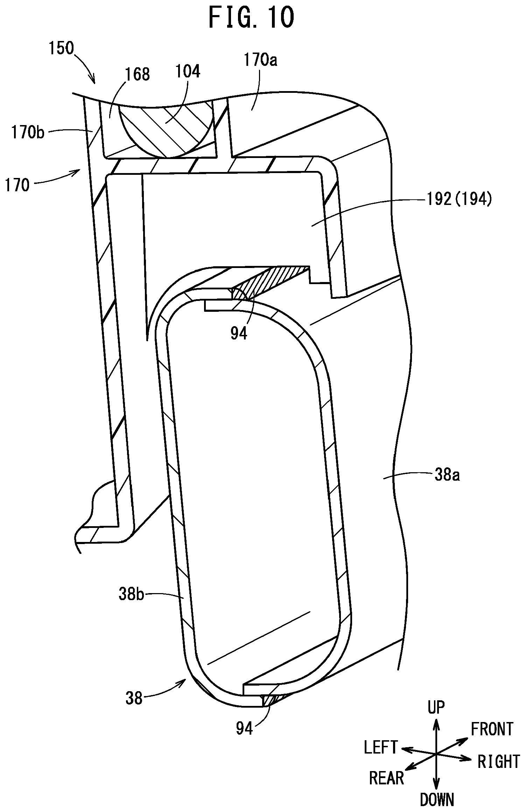

In the above description, a case is described in which the ribs 184a, 184b, 187a, 187b, 188a, and 188b extending in the front-rear direction function as the weight transfer portion 184, 188, 189a, and 189b, but in the present embodiment, as shown in FIG. 10, a rib 192 (or a plurality thereof) extending in the left-right direction may function as a weight transfer portion 194. In this case as well, when viewed from the left-right direction (viewed from a side surface), at least portions of the wire harness 104, the rear wheel brake wire 108, the throttle wire 110, the battery 156, and the fuse box 164 are housed in the storage case 150 in a manner to overlap with the weight transfer portion 194.

Furthermore, each rib 186 connecting the ribs 184a and 184b can be made to function as a portion of the weight transfer portion 184 by contacting the top end portion of a right-side frame portion 38a and the top end portion of a left-side frame portion 38b. Furthermore, each rib 190 connecting the ribs 188a and 188b can be made to function as a portion of the weight transfer portion 188 by contacting the top end portion of a right-side frame portion 38a and the top end portion of a left-side frame portion 38b. Yet further, by providing a plurality of the ribs 186, 190, and 192, which extend in the left-right direction, at prescribed intervals in the front-back direction, these ribs can be made to function as part of the weight transfer portions 184, 188, and 194.

In other words, in the present embodiment, as long as the weight transfer portions 184, 188, 189a, and 189b contact the left-right pair of lower frames 38 and can transfer the weight of the step floor 54 to these lower frames 38, any type of rib may be used. Accordingly, as described above, the weight transfer portions 184, 188, 189a, and 189b may be formed by only the ribs 184a, 184b, 187a, 187b, 188a, and 188b that extend in the front-rear direction, or the weight transfer portions 184 and 188 may be formed including the ribs 186 and 190 that extend in the left-right direction. Alternatively, the weight transfer portions 184, 188, and 194 may be formed by only the ribs 186, 190, and 192 that extend in the left-right direction.

### [Effects of the Present Embodiment]

As described above, according to the motorcycle 10 of the present embodiment, the storage case 150 includes, in an integrated manner, the weight receiving portions 170, 182, 183a, and 183b that receive the weight of the step floor 54 and the weight transfer portions 184, 188, 189a, 189b, and 194 that transfer this weight to the lower frames 38, and therefore it is possible for the storage case 150 to transfer the weight of the step floor 54 including the weight of the rider to the lower frame 38 while storing the wire harness 104, the rear wheel brake wire 108, the throttle wire 110, the battery 156, and the fuse box 164, which are stored items. Due to this, there is no need for a specialized weight transfer mechanism, and therefore the cost of the motorcycle 10 can be reduced.

Furthermore, at least portions of the weight transfer portions 184, 188, 189a, 189b, and 194 overlap with the lower frames 38, in a planar view, and therefore it is possible to suitably transfer the weight of the step floor 54 to the lower frames 38.

Yet further, at least portions of the weight receiving portions 170, 182, 183a, and 183b overlap with the lower frames 38, in a planar view, and therefore it is possible to suitably transfer the weight of the step floor 54 to the lower frames 38.

Yet further, each stored item described above is stored between the left-right pairs of weight transfer portions 184, 188, 189a, 189b, and 194 provided to the storage case 150, and therefore it is possible to store each stored item while suitably transferring the weight of the step floor 54 to the lower frames 38.

Yet further, the wire harness 104, the rear wheel brake wire 108, and the throttle wire 110 are stored in the storage case 150 in a manner to overlap with the weight transfer portions 184, 188, 189a, 189b, and 194, in a planar view, and therefore it is possible to store each stored item in a small space while suitably transferring the weight of the step floor 54 to the lower frames 38.

Yet further, the weight transfer portions 184, 188, 189a, and 189b are formed by the ribs 184a, 184b, 187a, 187b, 188a, and 188b formed along the longitudinal direction (front-rear direction) of the lower frames 38, and therefore it is possible to suitably transfer the weight of the step floor 54 to the lower frames 38 along the front-rear direction.

Alternatively, even if the weight transfer portions 184, 188, and 194 are the ribs 186, 190, and 192 along the transverse direction (left-right direction) of the lower frames 38, the weight of the step floor 54 can be suitably transferred to the lower frames 38 along the left-right direction. In this case, if a plurality of the ribs 186, 190, and 192 are provided at prescribed intervals in the front-rear direction, it is possible to efficiently transfer the weight of the step floor 54 to the lower frames 38.

Yet further, at least portions of the wire harness 104, the rear wheel brake wire 108, and the throttle wire 110 that are wire-shaped members overlap with the lower frames 38 and at least a portion of the storage case 150 is arranged between the wire-shaped members and the lower frames 38, in a planar view, and therefore it is possible to house the wire-shaped members in the storage case 150 while protecting these wire-shaped members from the lower frames 38.

### [Modifications of the Present Embodiment]

In the motorcycle 10 according to the present embodiment, a case is described in which the stored items stored in the storage case 150 are the wire harness 104, the rear wheel brake wire 108, and the throttle wire 110, which are wire-shaped members, and also the battery 156 and the fuse box 164. However, it is obvious that the present embodiment can be applied even if other wire-shaped members or stored items are stored in the storage case 150.

Furthermore, in the present embodiment, the motorcycle 10 is described as including the unit swing engine 18, but it is obvious that the present embodiment can also be applied to a motorcycle 10 that includes a power train at a different position than in the above description. For example, the present embodiment can be applied to a motorcycle in which the power train is arranged below the main frame, such as the motorcycle disclosed in Japanese Laid-Open Patent Publication 2008-162527, for example.

## Claims

1. A vehicle (10) comprising a step floor (54) that receives a weight of a rider, a frame (38) arranged below the step floor (54), and a storage case (150) with items (104, 108, 110, 156, 164) stored in it in a space formed by the step floor (54) and the frame (38), wherein
the storage case (150) includes weight receiving portions (170, 182, 183a, 183b) that receive the weight of the step floor (54) and weight transfer portions (184, 188, 189a, 189b, 194) that transfer the received weight to the frame (38), the weight receiving portions and the weight transfer portions being formed integrally with the storage case, and
the frame (38) comprises: a right-side frame portion (38a) on a right side of the vehicle (10) in a vehicle widthwise direction; a left-side frame portion (38b) on a left side of the vehicle (10) in the vehicle widthwise direction; and a coupling portion (94) coupling the right-side frame portion (38a) and the left-side frame portion (38b),
**characterized in that**
the coupling portion (94) is formed along a longitudinal direction of the frame (38),
the weight transfer portions (184, 188, 189a, 189b) are a plurality of ribs (184a, 184b, 187a, 187b, 188a, 188b) formed along the coupling portion (94), and
each of the plurality of ribs (184a, 184b, 187a, 187b, 188a, 188b) is formed at a location above the right-side frame portion (38a) or above the left-side frame portion (38b) so that the plurality of ribs (184a, 184b, 187a, 187b, 188a, 188b) interpose the coupling portion (94).

2. The vehicle (10) according to Claim 1, wherein
the weight transfer portions (184, 188, 189a, 189b, 194) are formed such that at least portions thereof overlap with the frame (38), in a planar view.

3. The vehicle (10) according to Claim 1 or 2, wherein
the weight receiving portions (170, 182, 183a, 183b) are formed such that at least portions thereof overlap with the frame (38), in a planar view.

4. The vehicle (10) according to any one of Claims 1 to 3, wherein
at least one pair of the weight transfer portions (184, 188, 189a, 189b, 194) is included in the storage case (150), and the stored items (104, 108, 110, 156, 164) are stored between the weight transfer portions (184, 188, 189a, 189b, 194) forming the pair.

5. The vehicle (10) according to any one of Claims 1 to 4, wherein
the items (104, 108, 110, 156, 164) are stored in the storage case (150) such that at least portions thereof overlap with the weight transfer portions (184, 188, 189a, 189b, 194), in a side surface view.

6. The vehicle (10) according to any one of Claims 1 to 5, wherein
the weight transfer portions (184, 188, 194) are ribs (186, 190, 192) formed along a transverse direction of the frame (38).

7. The vehicle (10) according to any one of Claims 1 to 6, wherein
the stored items (104, 108, 110, 156, 164) include wire-shaped members,
at least portions of the wire-shaped members (104, 108, 110) overlap with the frame (38), in a planar view, and
at least a portion of the storage case (150) is arranged between the wire-shaped members (104, 108, 110) and the frame (38).

## Patentansprüche

1. Fahrzeug (10), das einen Trittboden (54), der ein Gewicht eines Fahrers aufnimmt, einen Rahmen (38), der unter dem Trittboden (54) angeordnet ist, sowie einen Aufbewahrungskasten (150) mit darin aufbewahrten Gegenständen (104, 108, 110, 156, 164) in einem durch den Trittboden (54) und den Rahmen (38) gebildeten Raum aufweist, wobei
der Aufbewahrungskasten (150) Gewichtaufnahmeabschnitte (170, 182, 183a, 183b) enthält, die das Gewicht des Trittbodens (54) aufnehmen, sowie Gewichtübertragungsabschnitte (184, 188, 189a, 189b, 194), die das aufgenommene Gewicht auf den Rahmen (38) übertragen, enthält, wobei die Gewichtaufnahmeabschnitte und die Gewichtübertragungsabschnitte einstückig mit dem Aufbewahrungskasten ausgebildet sind, und
der Rahmen (38) aufweist: einen rechten Seitenrahmenabschnitt (38a) an einer in Fahrzeugbreitenrichtung rechten Seite des Fahrzeugs (10); einen linken Seitenrahmenabschnitt (38b) an einer in der Fahrzeugbreitenrichtung linken Seite des Fahrzeugs (10); sowie einen Verbindungsabschnitt (94), der den rechten Seitenrahmenabschnitt (38a) mit dem linken Seitenrahmenabschnitt (38b) verbindet,
**dadurch gekennzeichnet, dass** der Verbindungsabschnitt (94) entlang einer Längsrichtung des Rahmens (38) ausgebildet ist,
die Gewichtübertragungsabschnitte (184, 188, 189a, 189b) eine Mehrzahl von entlang dem Verbindungsabschnitt (94) ausgebildeten Rippen (184a, 184b, 187a, 187b, 188a, 188b) sind, und
jede der Mehrzahl von Rippen (184a, 184b, 187a, 187b, 188a, 188b) an einem Ort über dem rechten Seitenrahmenabschnitt (38a) oder über dem linken Seitenrahmenabschnitt (38b) ausgebildet ist, so dass die Mehrzahl von Rippen (184a, 184b, 187a, 187b, 188a, 188b) den Verbindungsabschnitt (94) zwischen sich anordnen.

2. Fahrzeug (10) nach Anspruch 1, wobei
die Gewichtsübertragungsabschnitte (184, 188, 189a, 189b, 194) derart ausgebildet sind, dass zumindest Abschnitte von ihnen in Draufsicht mit dem Rahmen (38) überlappen.

3. Das Fahrzeug (10) nach Anspruch 1 oder 2, wobei
die Gewichtaufnahmeabschnitte (170, 182, 183a, 183b) derart ausgebildet sind, dass zumindest Abschnitte von ihnen in Draufsicht mit dem Rahmen (38) überlappen.

4. Das Fahrzeug (10) nach einem der Ansprüche 1 bis 3, wobei
zumindest ein Paar der Gewichtsübertragungsabschnitte (184, 188, 189a, 189b, 194) in dem Aufbewahrungskasten (150) enthalten ist, und die aufbewahrten Gegenstände (104, 108, 110, 156, 164) zwischen den das Paar bildenden Gewichtübertragungsabschnitten (184, 188, 189a, 189b) aufbewahrt sind.

5. Das Fahrzeug (10) nach einem der Ansprüche 1 bis 4, wobei
die Gegenstände (104, 108, 110, 156, 164) in dem Aufbewahrungskasten (150) derart aufbewahrt sind, dass zumindest Abschnitte davon in Seitenansicht mit den Gewichtübertragungsabschnitten (184, 188, 189a, 189b, 194) überlappen.

6. Das Fahrzeug (10) nach einem der Ansprüche 1 bis 5, wobei
die Gewichtübertragungsabschnitte (184, 188, 194) entlang einer Querrichtung des Rahmens (38) ausgebildete Rippen (186, 190, 192) sind.

7. Das Fahrzeug (10) nach einem der Ansprüche 1 bis 6, wobei
die aufbewahrten Gegenstände (104, 108, 110, 156, 164) drahtförmige Elemente enthalten,
zumindest Abschnitte der drahtförmigen Elemente (104, 108, 110) in Draufsicht mit dem Rahmen (38) überlappen, und
zumindest ein Abschnitt des Aufbewahrungskastens (150) zwischen den drahtförmigen Elementen (104, 108, 110) und dem Rahmen (38) angeordnet ist.

## Revendications

1. Véhicule (10) comprenant un plancher à pieds (54) qui reçoit un poids d'un motocycliste, un cadre (38) agencé en dessous du plancher à pieds (54), et un boîtier de stockage (150) avec des articles (104, 108, 110, 156, 164) stockés dans celui-ci dans un espace formé par le plancher à pieds (54) et le cadre (38), dans lequel
le boîtier de stockage (150) inclut des parties de réception de poids (170, 182, 183a, 183b) qui reçoivent le poids du plancher à pieds (54) et des parties de transfert de poids (184, 188, 189a, 189b, 194) qui transfèrent le poids reçu au cadre (38), les parties de réception de poids et les parties de transfert de poids étant formées de façon monobloc avec le boîtier de stockage, et
le cadre (38) comprend : une partie de cadre de côté droit (38a) sur un côté droit du véhicule (10) dans une direction de largeur de véhicule ; une partie de cadre de côté gauche (38b) sur un côté gauche du véhicule (10) dans la direction de largeur de véhicule ; et une partie de couplage (94) couplant la partie de cadre de côté droit (38a) et la partie de cadre de côté gauche (38b),
**caractérisé en ce que**
la partie de couplage (94) est formée le long d'une direction longitudinale du cadre (38),
les parties de transfert de poids (184, 188, 189a, 189b) sont une pluralité de nervures (184a, 184b, 187a, 187b, 188a, 188b) formées le long de la partie de couplage (94), et
chacune de la pluralité de nervures (184a, 184b, 187a, 187b, 188a, 188b) est formée à un emplacement au-dessus de la partie de cadre de côté droit (38a) ou au-dessus de la partie de cadre de côté gauche (38b) pour que la pluralité de nervures (184a, 184b, 187a, 187b, 188a, 188b) interposent la partie de couplage (94).

2. Véhicule (10) selon la revendication 1, dans lequel
les parties de transfert de poids (184, 188, 189a, 189b, 194) sont formées de telle sorte qu'au moins des parties de celles-ci chevauchent le cadre (38), en vue en plan.

3. Véhicule (10) selon la revendication 1 ou 2, dans lequel
les parties de réception de poids (170, 182, 183a, 183b) sont formées de telle sorte qu'au moins des parties de celles-ci chevauchent le cadre (38), en vue en plan.

4. Véhicule (10) selon l'une quelconque des revendications 1 à 3, dans lequel
au moins une paire des parties de transfert de poids (184, 188, 189a, 189b, 194) est incluse dans le boîtier de stockage (150), et les articles stockés (104, 108, 110, 156, 164) sont stockés entre les parties de transfert de poids (184, 188, 189a, 189b, 194) formant la paire.

5. Véhicule (10) selon l'une quelconque des revendications 1 à 4, dans lequel
les articles (104, 108, 110, 156, 164) sont stockés dans le boîtier de stockage (150) de telle sorte qu'au moins des parties de ceux-ci chevauchent les parties de transfert de poids (184, 188, 189a, 189b, 194), en vue en surface latérale.

6. Véhicule (10) selon l'une quelconque des revendications 1 à 5, dans lequel
les parties de transfert de poids (184, 188, 194) sont des nervures (186, 190, 192) formées le long d'une direction transversale du cadre (38).

7. Véhicule (10) selon l'une quelconque des revendications 1 à 6, dans lequel
les articles stockés (104, 108, 110, 156, 164) incluent des éléments en forme de fil, au moins des parties des éléments en forme de fil (104, 108, 110) chevauchent le cadre (38), en vue en plan, et
au moins une partie du boîtier de stockage (150) est agencée entre les éléments en forme de fil (104, 108, 110) et le cadre (38).
